# EUROPEAN PATENT APPLICATION

(11) **EP 4 656 887 A1**
(43) Date of publication of application: **03.12.2025**
(21) Application number: 24178370.3
(22) Date of filing: 28.05.2024
(51) Int. Cl.: F15B 11/028, B60T 13/26, B60T 13/68, B60T 17/00, F15B 21/041, F15B 21/048, B60G 17/015, F15B 11/064

(54) **A PNEUMATIC SYSTEM FOR A VEHICLE**

(71) Applicant: VOLVO TRUCK CORPORATION, 405 08 Göteborg (SE)
(72) Inventor: BEBON, Hugo, 69800 ST PRIEST (FR)
(74) Representative: Zacco Sweden AB

(57) **Abstract**

A pneumatic system for a vehicle, comprising an air compressor for pressurizing an air tank. A flow passage extending from compressor is bifurcated to a first valve and to a second valve. The first valve has a first state preventing air from passing to the air tank, and has a second state allowing air to pass to the air tank. In a first mode of operation of the pneumatic system, the first vale is in said first state and the second valve controls air flow from the compressor to ambient environment. The second valve is configured to change to, or remain in, an open state when the pressure of the air upstream of the second valve is higher than a predetermined threshold, and to change to, or remain in, a closed state when the pressure of the air upstream of the second valve is lower than the predetermined threshold.

## Description

### TECHNICAL FIELD

The disclosure relates generally to a pneumatic system. In particular aspects, the disclosure relates to a pneumatic system for a vehicle. The disclosure can be applied to heavy-duty vehicles, such as trucks, buses, and construction equip1ment, among other vehicle types. Although the disclosure may be described with respect to a particular vehicle, the disclosure is not restricted to any particular vehicle.

### BACKGROUND

In existing pneumatic systems for vehicles, it is known to use a compressor to produce compressed air for braking, for pneumatic suspensions, and for pneumatic auxiliaries. It is also known to install an overflow valve just downstream of the outlet port of the compressor, in order to maintain the pressure at the compressor outlet. Because of the overflow valve, the pressure between the compressor and the overflow valve needs to reach the opening pressure of the overflow valve in order to open the overflow valve so that compressed air can be delivered to components further downstream. The opening pressure of the overflow valve is normally set by a spring. This leads to fixed opening pressure. This in turn means that whatever system pressure is present downstream of the overflow valve, the minimal compressor working pressure is the opening pressure of the overflow valve. In some cases the system pressure is lower than said opening pressure, which means that the compressor runs at a pressure which is higher than what is needed by the system. This leads to energy waste.

### SUMMARY

According to a first aspect of the disclosure, there is provided a pneumatic system for a vehicle, comprising:
- an air tank,
- a first valve,
- a second valve, and
- an air compressor configured to provide air from an output of the air compressor for pressurizing the air tank, wherein a flow passage extending from the output of the air compressor is bifurcated such that a first branch of the flow passage extends to the first valve and a second branch of the flow passage extends to the second valve,
- wherein the first valve is configured to control air flow from the output of the air compressor to the air tank, wherein the first valve has a first state in which air is prevented from passing from the output of the air compressor to the air tank via the first valve, and has a second state in which air is allowed to pass from the output of the air compressor to the air tank via the first valve,
- wherein the pneumatic system is operable in a first mode of operation in which the first valve is in said first state,
- wherein, in said first mode of operation of the pneumatic system, the second valve is configured to control air flow from the output of the air compressor to ambient environment, the second valve having a closed state in which air is prevented from passing from the output of the air compressor to the ambient environment via the second valve, and an open state in which air is allowed to pass from the output of the air compressor to the ambient environment via the second valve,
- wherein the second valve is configured to change to, or remain in, said open state when the pressure of the air in said second branch is higher than a predetermined threshold, and to change to, or remain in, said closed state when the pressure of the air in the second branch is lower than the predetermined threshold. The first aspect of the disclosure may seek to avoid the compressor to run at higher pressure than what is really needed by the pneumatic system. A technical benefit may include that by providing a bifurcated flow passage as defined above, compressed air can go through the first valve to the air tank so that the compressor working pressure may be equal to the system pressure and so that there is substantially no energy waste, and when compressed air is no longer required to the air tank, the compressed air can be guided through the second valve (having an opening pressure, i.e. the predetermined threshold) in order to keep the pressure at the output of the air compressor. Hereby, the compressed air does not need to constantly force its way through the second valve and its predetermined threshold, and therefore energy waste may be avoided. It should be understood that when no more compressed air is required to the air tank, it may still be desirable to continue to run the compressor for thermal management (e.g. to reach an appropriate compressor internal temperature to evaporate water and avoid corrosion). Thus, the compressor may be continued to run and the compressed air may be discharged to the ambient environment. In this disclosure the terms "compressor" and "air compressor" are used interchangeably.

Optionally in some examples, including in at least one preferred example, the pneumatic system may be operable in a second mode of operation in which the first valve is in the second state and in which the air tank becomes loaded with pressurized air supplied from the output of the air compressor via the first valve. A technical benefit may include that due to the bifurcation of the flow passage from the output of the air compressor, in said second mode of operation, the compressed air does not need to overcome the predetermined threshold of the second valve, but may smoothly flow along the first branch and through the open first valve to the air tank. Thus, the air compressor does not need to run at an unnecessarily high pressure to supply compressed air to the air tank.

Optionally in some examples, including in at least one preferred example, the pneumatic system may further comprise a filter located downstream of the first valve such that in the second state of the first valve, air that passes from the output of the air compressor to the air tank via the first valve, also passes through the filter after it has passed through the first valve, before the air reaches the air tank. A technical benefit may include that compressed air that is supplied to the air tank via the first valve can be appropriately filtered, thereby reducing the risk of unwanted particles to reach the air tank. On the other hand, when discharging air to the ambient environment via the second valve, the filter can be bypassed thereby avoiding saturating the filter prematurely.

Optionally in some examples, including in at least one preferred example, the pneumatic system may be operable in a third mode of operation in which the first valve is in the first state and in which pressurized air from the air tank is provided to the filter to regenerate the filter. A technical benefit may include that by closing the first valve, air from the air tank can efficiently be provided through the filter in the reverse direction to regenerate the filter. The air and the particles that become released from the filter during the regeneration may be passed to the ambient environment. It should be understood that in the third mode of operation of the pneumatic system, the second valve may be in its closed state if the pressure of the air in said second branch is lower than the predetermined threshold or in its open state if the pressure of the air in said second branch is higher than the predetermined threshold. Thus, in the third mode of operation of the pneumatic system, the compressor may still be operated (for example, for compressor temperature management reasons).

Optionally in some examples, including in at least one preferred example, the pneumatic system may further comprise:
- a first energizable valve device,
- a second energizable valve device, and
- processing circuitry configured to set a current mode of operation of the pneumatic system by selectively energizing the first and second valve devices. A technical benefit may include that using energizable valve devices, provides an efficient control of different modes of operation of the pneumatic system. Some examples of such control will be discussed below.

Optionally in some examples, including in at least one preferred example, the air tank may have a cut-off pressure, wherein when the air pressure in the air tank reaches the cut-off pressure, the processing circuitry may energize the first energizable valve device, thereby allowing pressurized air that is present in a volume between the air tank and the first energizable valve device to pass through the first energizable valve device and reach the first valve so as to pneumatically activate the first valve to change to its first state. A technical benefit may include that in this way, the first valve may be changed to its first state in a timely manner, thereby avoiding providing compressed air to the air tank when no longer required. Suitably, there may be provided a pressure sensor at the air tank, which pressure sensor may be operatively connected to the processing circuitry. The processing circuitry may include a single control unit (or processor device) or a plurality of control units (or processor devices) connected or otherwise communicatively coupled to each other, such that any performed function may be distributed between the control units (processor devices) as desired. Further, such devices may communicate with each other or other devices by various system architectures, such as directly or via a Controller Area Network (CAN) bus, etc.

Optionally in some examples, including in at least one preferred example, in order to set the pneumatic system in said third mode of operation, the processing circuitry may be configured to energize the second energizable valve device, thereby allowing pressurized air that is present in a volume between the air tank and the second energizable valve device to pass through the second energizable valve device and reach the filter so as to regenerate the filter in said third mode of operation. A technical benefit may include that filter regeneration may be efficiently controlled in this way. Thus, already pressurized air available downstream of the filter may be used for regenerating the filter.

Optionally in some examples, including in at least one preferred example, in order to set the pneumatic system in said third mode of operation, the processing circuitry may also be configured to energize the first energizable valve device to allow pressurized air to pass through the first energizable valve device to pneumatically activate the first valve to change to its first state. A technical benefit may include that by allowing the processing circuitry to control both the first and the second energizable valve, the pressurized air available downstream of the filter may be used in an efficient way to both out the first valve in its first state and to blow through the filter in the reverse direction. Because of the first valve being arranged in said first state, compressed air from the compressor is prevented from counteracting the flow of regenerative pressurized air.

Optionally in some examples, including in at least one preferred example, the first valve may comprise a first channel and a second channel, wherein in said first state of the first valve:
- the first channel is closed to prevent air from passing from the output of the air compressor to the air tank via the first valve, and
- the second channel is open to allow air that has passed from the output of the air compressor and through the second valve to then also pass through the second channel of the first valve before reaching the ambient environment. A technical benefit may include that, hereby, air coming through the second valve may automatically be guided to the ambient environment when the first valve is arranged in said first state.
Optionally in some examples, including in at least one preferred example, in said second state of the first valve:
- the first channel is open to allow air to pass from the output of the air compressor, through the first channel of the first valve, to the air tank, and
- the second channel is closed to prevent air from passing from the second valve, through the first valve, to the ambient environment. A technical benefit may include that, when the first valve is in its second state (allowing air to pass from the output of the air compressor to the air tank via the first channel of the first valve), then any compressed air passing through the second valve (assuming the pressure overcomes the predetermined threshold) may suitably also be guided to reach the air tank and not be wasted to the ambient environment (since the second channel is closed).

Optionally in some examples, including in at least one preferred example, the pneumatic system may further comprise a third valve arranged between the second valve and an outlet to the ambient environment, the third valve having an open state in which air from the second valve is allowed to flow through the third valve to the ambient environment, and a closed state in which air from the second valve is prevented from flowing through the third valve to the ambient environment, wherein, in said first mode of operation of the pneumatic system, the third valve is in its open state. A technical benefit may include that providing such a third valve allows more freedom of design, for example, with respect to how to draw tubing from the second valve to ambient environment, i.e. not being restricted to let the air pass via the first valve to the ambient environment.

Optionally in some examples, including in at least one preferred example, the air compressor may be an oil-lubricated air compressor. The teachings of the present disclosure may be particularly beneficial for oil-lubricated air compressors. In particular, in cases when it is desired to stop an oil-lubricated air compressor (e.g. air tank has reached its target pressure), the risk of a high pressure drop, and therefore the risk of high oil rejection, can be avoided. In particular, if the compressor is stopped, then the second valve will close when the pressure of the air flowing through the second valve falls below the predetermined threshold. Hereby, pressure between compressor and the second valve may be kept at a desired level, wherefore there will be no high pressure drop (which would otherwise be the case if the output of the air compressor would be allowed to remain in open communication with the ambient environment).

Optionally in some examples, including in at least one preferred example, the pneumatic system may further comprise an air dryer located downstream of the air compressor and upstream of the air tank, wherein the first valve and the second valve are integrated in the air dryer. A technical benefit may include that by integrating the first valve and the second valve in the air dryer, the function of a traditional overflow valve (which would normally be provided between the compressor and the air dryer) may now be assigned to the second valve, and that the second valve may be bypassed when it is not needed and instead the compressed air can pass smoothly through the first valve to the air tank.

Optionally in some examples, including in at least one preferred example, the pneumatic system may further comprise a bypass passage which allows for fluid communication between a first point and a second point, wherein the first point is located in an air passage between the first valve and the filter, and wherein the second point is located in an air passage between the second valve and the first valve. A technical benefit may include that when the filter is regenerated, air passing in the reverse direction through the filter may then be allowed to flow along said bypass passage (from the first point to the second point), which in turn may lead to the ambient environment via a channel in the first valve. When the first valve is in the second state allowing compressed air to be passed through the first valve to the air tank, then the bypass passage may suitably also allow any compressed air that has passed through the second valve to pass from the second point to the first point of the bypass passage, in order to contribute to the filling of the air tank.

Optionally in some examples, including in at least one preferred example, the first valve may be spring-biased towards the second state. A technical benefit may include that hereby the first valve is normally in an operating condition in which it allows air to be supplied from the compressor to the air tank, and that the spring force needs to be overcome in order to move the first valve to its first state. As mentioned previously, this may suitably be effectuated when the air tank has reached a cut-off pressure, wherein excess air pressure may be used to move the first valve to its first state against the force of the spring bias.

Optionally in some examples, including in at least one preferred example, the second valve may be spring-biased towards the closed state. A technical benefit may include that hereby, it may conveniently function similarly to an overflow valve, requiring the compressed air from the compressor to overcome the predetermined threshold caused by the spring force.

Optionally in some examples, including in at least one preferred example, the pneumatic system may further comprise a check-valve, wherein the filter is located between the first valve and the check-valve, wherein the check-valve allows air to flow from the filter through the check valve to the air tank, but prevents air flow in the opposite direction. A technical benefit may include that pressure in the air tank may be efficiently maintained, and unwanted backflow can be avoided when the compressor is stopped.

Optionally in some examples, including in at least one preferred example, said check-valve may be a first check-valve, wherein the pneumatic system may further comprise a second check-valve, wherein the second check-valve may be located in an air passage extending from the second energizable valve device to a point located between the filter and the first check-valve. A technical benefit may include that hereby the filter can be effectively regenerated, and unwanted backflow to the second energizable valve can be avoided.

Optionally in some examples, including in at least one preferred example, the pneumatic system may further comprise:
- a first air passage extending from the output of the air compressor to the first valve,
- a second air passage extending from the first valve to the air tank,
- a third air passage extending from the output of the air compressor to the second valve,
- a fourth air passage extending from the second valve to the first valve,
- a fifth air passage extending from the first valve to the ambient environment,
wherein pressurized air passes said first air passage and said second air passage on its way from the output of the compressor to the air tank, and wherein air passes said fourth air passage and said fifth air passage on its way from the second valve to the ambient environment. A technical benefit may include that hereby you can avoid the compressor to run at higher pressure that what is really needed by the pneumatic system.

According to a second aspect of the disclosure, there is provided a vehicle comprising the pneumatic system according to the first aspect, including any examples thereof. The second aspect of the disclosure may seek to solve corresponding problem and provide similar technical benefits as the first aspect, including any examples thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an illustration of a vehicle according to at least one example of this disclosure.
**FIG. 2** is a schematic illustration of a prior art pneumatic system.
**FIG. 3** is a schematic illustration of a pneumatic system according to at least one example of this disclosure.
**FIGS. 4-7** illustrate schematically a pneumatic system according to at least one example of this disclosure; wherein different operating modes of the pneumatic system are illustrated.
**FIGS. 8-11** illustrate schematically a pneumatic system according to at least another example of this disclosure; wherein different operating modes of the pneumatic system are illustrated.
**FIG. 12** is a further schematic illustration of a pneumatic system according to at least one example of this disclosure.

### DETAILED DESCRIPTION

The detailed description set forth below provides information and examples of the disclosed technology with sufficient detail to enable those skilled in the art to practice the disclosure.

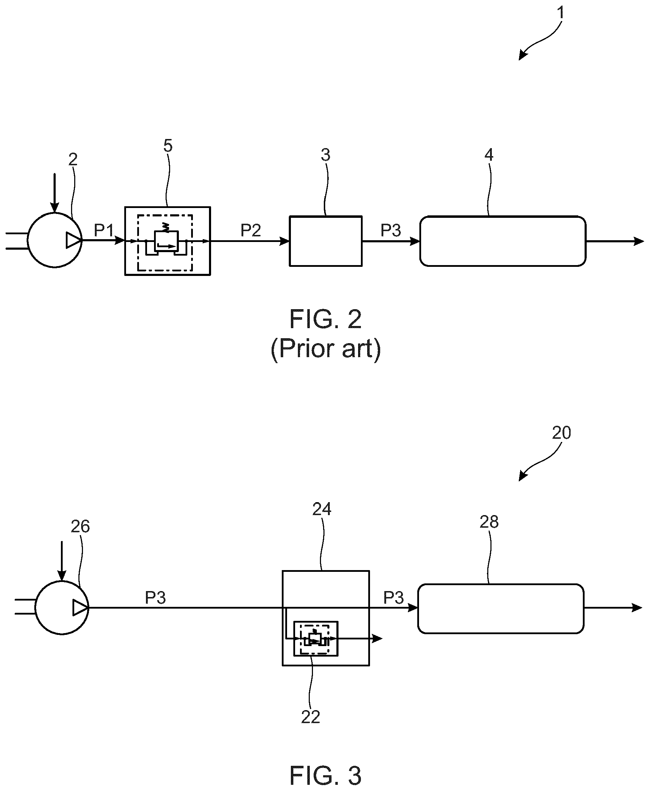

A prior art pneumatic system **1** is schematically illustrated in **FIG. 2****.** A compressor **2** produces compressed air which is passed through an air dryer **3** to an air tank **4** from which the pressurized air may be supplied to different vehicle components, such as brakes, suspensions, auxiliaries, etc. An overflow valve **5** is provided between the compressor **2** and the air dryer **3.** When the air dryer **3** is operated to discharge air to ambient atmosphere, instead of air being supplied to the air tank **4,** the presence of the overflow valve **5** is beneficial to avoid the risk of sudden pressure drops at the output of the compressor **2.** However, when it is desired to supply pressurized air to the air tank **4,** then the presence of the overflow valve **5** may present a hurdle. The pressure between the compressor **2** and the overflow valve **5** needs to reach the opening pressure of the overflow valve **5** so that compressed air can be delivered to the air tank **4.** Thus, even though the system pressure is low downstream of the overflow valve **5,** the compressor **2** will still need a working pressure which is at least equal to the opening pressure of the overflow valve **5.** Therefore, in cases when the system pressure is lower than said opening pressure, the compressor **2** will be running at a pressure which is higher than what is needed by the system. In **FIG. 2** the pressure is **P1** in the line between the compressor **2** and the overflow valve **5;** the pressure is **P2** in the line between the overflow valve **5** and the air dryer **3;** and the pressure is **P3** after the air dryer **3** and also in the air tank **4** (system pressure). Thus, in the above-mentioned cases, when the compressor **2** runs at a pressure which is higher than what is needed by the system (**P3**), then **P1** > **P3.** This leads to energy waste.

According to the present disclosure such energy wasting may be avoided by providing a valve which has a functionality similar to the above exemplified overflow valve, i.e. allowing pressure at the compressor output to be maintained when needed, but which valve may be bypassed when its functionality is not needed. In particular, when the system pressure is low, such a valve may be bypassed so that air can still be provided to the air tank even though the compressor is running at a pressure which is lower than the opening pressure of that valve.

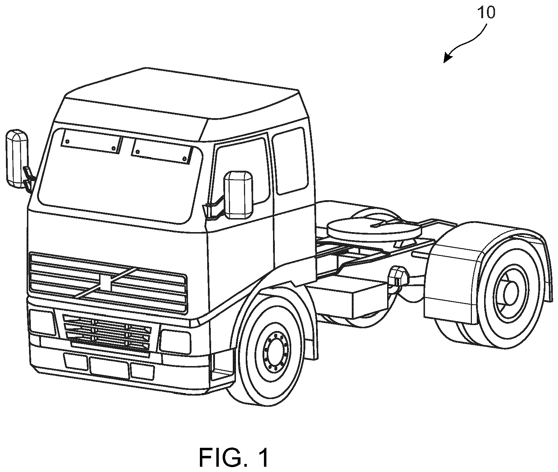

**FIG. 1** is an illustration of a vehicle **10** according to at least one example of this disclosure. More specifically, the illustrated vehicle **10** is a heavy-duty vehicle in the form of a tractor unit, which may be configured to pull a trailer unit. However, the teachings of the present disclosure may be implemented for other types of vehicles as well. The vehicle **10** may be a driver-operated vehicle or a self-driving autonomous vehicle. The vehicle **10** may comprise a pneumatic system in accordance with any example of this disclosure, including the examples which will be discussed below with reference to **FIGS. 3-12****.**

**FIG. 3** is a schematic illustration of a pneumatic system **20** according to at least one example of this disclosure. In particular, **FIG. 3** is a very general illustration of an exemplary implementation of the teachings of this disclosure. In this example, an overflow valve **22** has instead been illustrated as being integrated in the air dryer **24,** and that discharging air to the ambient environment may be done via the overflow valve **22.** As is also illustrated in **FIG. 3****,** in order for the compressor **26** to supply compressed air to the air tank **28,** there is no need to pass through the overflow valve **22.** Thus, the pressure in the line between the compressor **26** and the air dryer **24** may be held at the same pressure (**P3**) as the pressure in the air tank **28.** Hereby, energy waste may be avoided. As mentioned above, **FIG. 3** illustrates that an overflow valve **22** is integrated in the air dryer **24.** This may be a practical configuration as bulkiness of tubes/pipes etc. may be reduced, keeping a plurality of components in one common housing. Nevertheless, it should be understood that the bypassing may be achieved even if the overflow valve **22** is provided outside of the air dryer **24.** Thus, according to some examples, the overflow valve **22** may be a separate component from the air dryer **24.**

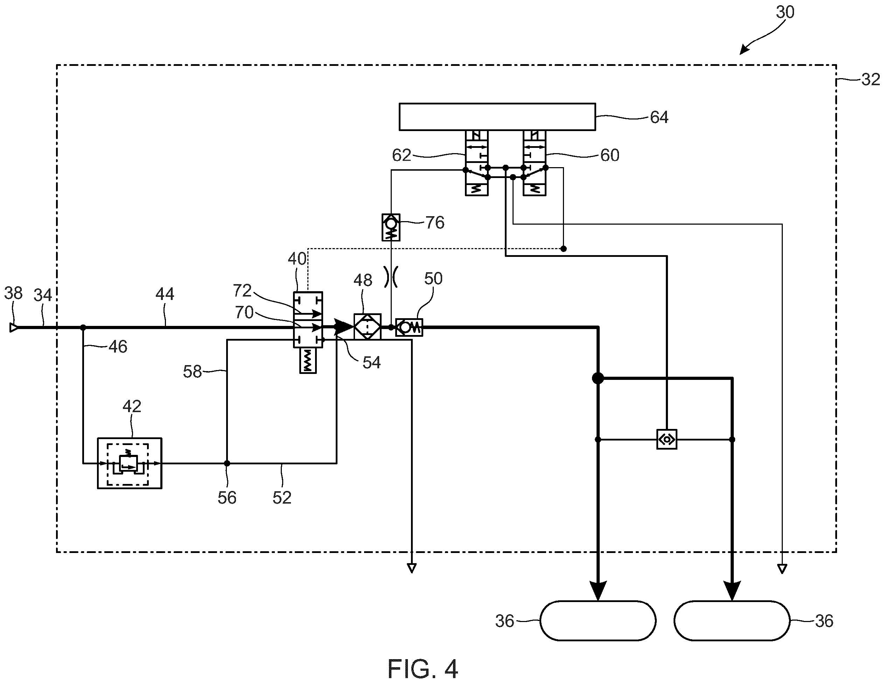

More detailed examples of a pneumatic system of this disclosure will now be discussed with respect to **FIGS. 4-7** and **FIGS. 8-11****.** In these drawing figures, reference will be made to a "second valve", which may have similar functionality to the overflow valve mentioned in **FIG. 3****.** It should, however, be understood that although these drawing figures illustrate that the second valve is integrated into the air dryer, in other examples the second valve may be provided outside the air dryer. Furthermore, although these drawings illustrate two air tanks that may receive compressed air from the air compressor, the teachings of this disclosure are not limited to a specific number of air tanks. Thus, the pneumatic system may include one, two, three or more air tanks to be provided with air from an air compressor.

**FIGS. 4-7** illustrate schematically a pneumatic system **30** according to at least one example of this disclosure; wherein different operating modes of the pneumatic system **30** are illustrated.

Starting with **FIG. 4****,** in this example, the pneumatic system **30** comprises an air dryer **32,** which is schematically illustrated by the large dashed rectangle. A flow passage **34** is illustrated to extend from the outside of the air dryer **32** and into the air dryer **32.** The flow passage **34** extends from an output **38** of an air compressor (not shown in **FIGS. 4-7**), such as any one of the previously discussed air compressors. Compressed air may thus be delivered from the output **38** of the air compressor into the air dryer **32** in order to pressurize an air tank **36** (in **FIG. 4** two air tanks **36** can be pressurized). The air tanks **36** are provided in fluid communication with respective outlets of the air dryer **32.** The air compressor and the air tanks **36** are included in the pneumatic system **30.**

The pneumatic system **30** further comprises a first valve **40** and a second valve **42.** The flow passage **34** that extends from the output of the air compressor is bifurcated such that a first branch **44** of the flow passage **34** extends to the first valve **40** and a second branch **46** of the flow passage **34** extends to the second valve **42.** The first valve **40** is configured to control air flow from the output **38** of the air compressor to the air tanks **36.** The first valve **40** has a first state in which air is prevented from passing from the output **38** of the air compressor to the air tanks **36** via the first valve **40,** and has a second state in which air is allowed to pass from the output **38** of the air compressor to the air tanks **36** via the first valve **40.** In **FIG. 4****,** the first valve **40** is in its second state. Thus, the first valve **40** is now positioned to allow air from the compressor to pass along the first branch **44** to and through the first valve **40.** Downstream of the first valve **40,** there may be provided a filter **48** for removing unwanted particles from the air stream and a first check-valve **50** for preventing backflow. Thus, **FIG. 4** illustrates an operating mode in which the first valve **40** is in its second state and in which the air tanks **36** may become loaded with pressurized air supplied from the output **38** of the air compressor via the first valve **40** (and in this example also via the filter **48** and the first check-valve **50**).

The second valve **42** shown in **FIG. 4** has a closed state in which air cannot pass through the second valve **42,** and an open state in which air can pass through the second valve **42.** The second valve **42** may suitably be spring-biased towards the closed state, in order to set an opening pressure threshold. The second valve **42** is configured to change to, or remain in, the open state when the pressure of the air in the second branch **46** is higher than a predetermined threshold. Conversely, the second valve **42** is configured to change to, or remain in, the closed state when the pressure of the air in the second branch **46** is lower than the predetermined threshold. Thus, the functionality of the second valve **42** may be an overflow valve or may be regarded to correspond to the functionality of an overflow valve. As can be seen in **FIG. 4****,** the pneumatic system **30** may further comprise a bypass passage **52** which allows fluid communication between a first point **54** and a second point **56.** The first point **54** is located in an air passage between the first valve **40** and the filter **48,** and the second point **56** is located in an air passage **58** between the second valve **42** and the first valve **40.** If the air compressor provides a pressure which is higher than said predetermined threshold, then the pressurized air will, in addition to passing through the first valve **40,** also pass through the second valve **42** and via the bypass passage **52** to pressurize the air tanks **36.** However, if pressure requirement is low (lower than said predetermined threshold of the second valve **42**), then the second valve **42** may be bypassed and in such case the air from the compressor will only be delivered to the air tanks **36** via the first valve **40** since the second valve **42** remains closed.

**FIG. 4** also shows that the pneumatic system **30** may further comprise a first energizable valve device **60,** a second energizable valve device **62,** and a processing circuitry **64** configured to set a current mode of operation of the pneumatic system **30** by selectively energizing the first and/or second energizable valve devices **60, 62.** In **FIG. 4****,** however, the energizable valve devices **60, 62** have not been energized. The energizable valve devices **60, 62** may, for instance, be magnet or solenoid valves.

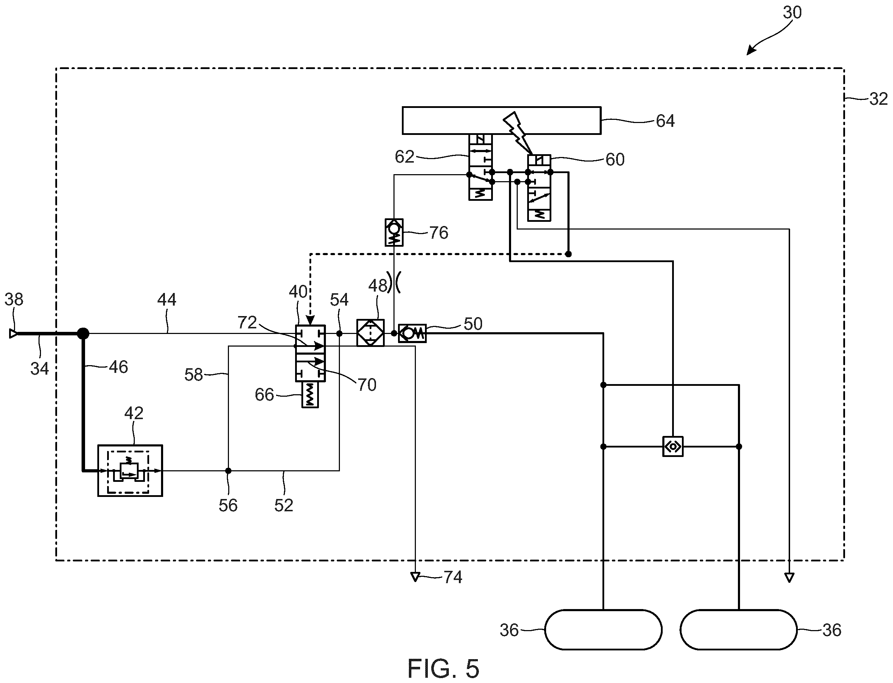

**FIG. 5** illustrates that the first energizable valve device **60** has been energized. This may be the case when the air pressure in the air tanks **36** have reached a cut-off pressure. Suitably, there may be provided pressure sensors (not illustrated) at the outlets of the air dryer **32,** wherein the pressure sensors may communicate the pressure level to the processing circuitry **64.** Thus, when the processing circuitry **64** receives information that the air pressure in the air tanks **36** have reached the cut-off pressure, the processing circuitry **64** may operate so that the first energizable valve device **60** becomes energized. When the first energizable valve device **60** is energized it moves to a position in which it allows pressurized air that is present in a volume between the air tanks **36** and the first energizable valve device **60** to pass through the first energizable valve device **60** and reach the first valve **40** so as to pneumatically activate the first valve **40** to change to its first state. Indeed, as can be seen in **FIG. 5****,** the first valve **40** is now in its first state instead of its second state shown in **FIG. 4****.** As can be seen, the first valve **40** may suitably be spring biased towards the second state (see indicated spring **66**). Thus, the pressurized air flowing through the first energizable valve device **60** must overcome the spring force so as to pneumatically actuate the first valve **40,** i.e. to achieve the change from the second state to the first state of the first valve **40.**

As can be seen in **FIG. 5****,** the first valve **40** may comprise a first channel **70** and a second channel **72.** In the illustrated first state of the first valve **40,** the first channel **70** is closed to prevent air from passing from the output **38** of the air compressor to the air tanks **36** via the first valve **40.** On the other hand, in the illustrated first state of the first valve **40,** the second channel **72** is open to allow air to pass through the second channel **72** of the first valve **40** and then reach the ambient environment via an exhaust port **74.** In contrast, in **FIG. 4****,** which illustrates the second state of the first valve **40,** the first channel **70** is open to allow air to pass to the air tanks **36,** while the second channel **72** is closed to prevent air from passing through the first valve **40** to the ambient environment.

Although **FIG. 5** illustrates the first valve **40** in its first state, wherein the second channel **72** would allow air to be discharged to the ambient environment, the pressure in the second branch **46** is in this illustration lower than the predetermined threshold of the second valve **42.** Thus, the second valve **42** will be in its closed state. Thus, **FIG. 5** may illustrate a mode of operation in with a cut-off pressure of the tanks **36** have been reached, and the compressor has stopped (for example because the right compressor temperature has already been reached and the compressor therefore does not need to continue running for corrosion avoidance purposes, etc.). Because the second valve **42** is closed and because the first channel **70** of the first valve **40** is closed, the pressure in the first and second branches **44, 46** and the flow passage **36** can be maintained. This is particularly advantageous in case of oil lubricated compressors, as this avoids a high pressure drop at the output **38** of the compressor and therefore avoids high oil rejection.

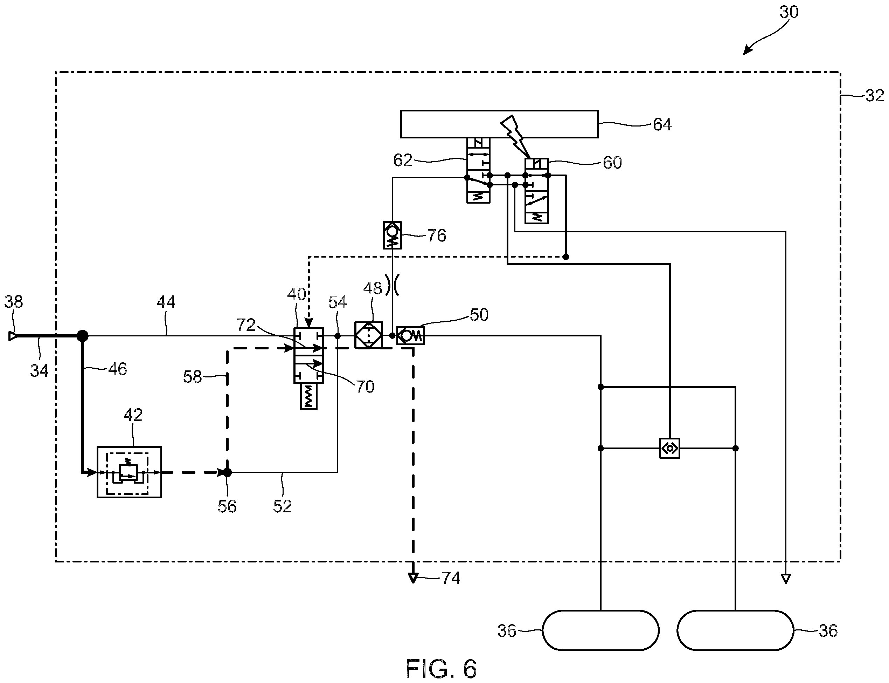

**FIG. 6** illustrates, similarly to **FIG. 5****,** that the first energizable valve device **40** has been energized. However, now the pneumatic system **30** is operated in a different mode of operation, in which the compressor continues to run for thermal management. The pressure in the second branch **46** becomes increased so that the second valve **42** is changed to its open state, wherein the compressed air is allowed to flow through the second valve **42.** Since the second channel **72** of the first valve **40** is open and in communication with ambient environment through the exhaust port **74,** there will be ambient pressure in the air passage **58** between the second valve **42** and the first valve **40.** Thus, when second valve **42** becomes opened, the air flowing through the second valve **42** will choose the path with least resistance, i.e. it will continue to flow through the first valve **40** and then to the ambient environment. Thus, **FIG. 6** illustrates that the pneumatic system **30** is operable in a first mode of operation in which the first valve **40** in the first state, and in that first mode of operation, the second valve **42** is configured to control air flow from the output **38** of the air compressor to ambient environment (the second valve **42** having a closed state in which air is prevented from passing via the second valve **42** to the ambient environment and an open state in which air allowed to pass via the second valve **42** to the ambient environment).

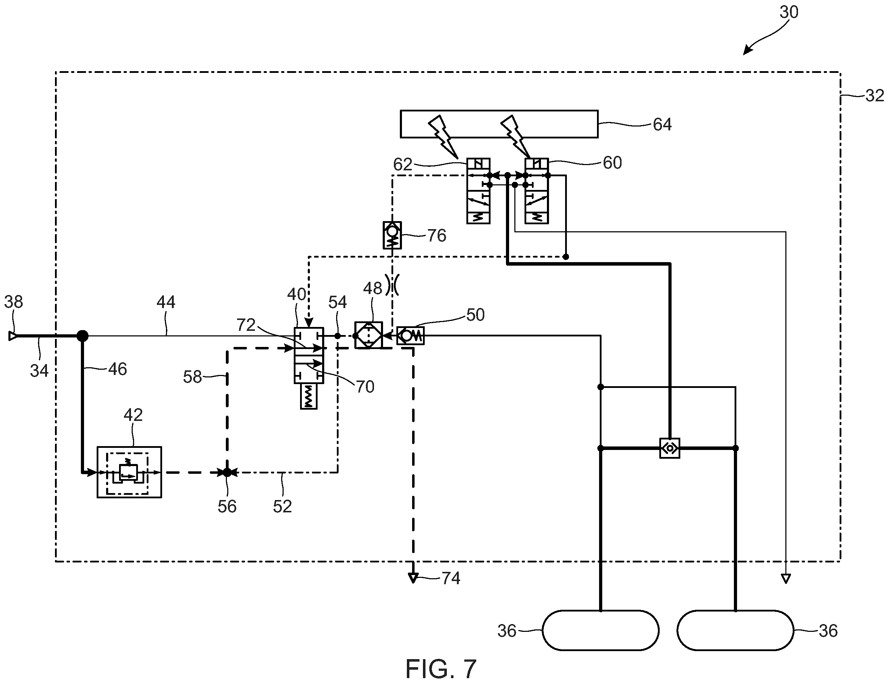

**FIG. 7** illustrates a mode of operation in which the first valve **40** is in the first state and in which pressurized air from the air tanks **36** is provided to the filter **48** to regenerate the filter **48.** Thus, in **FIG. 7** the processing circuitry **64** has not only caused the first energizable valve device **60** to become energized, which in turn has caused the first valve **40** to be in said first state, but the processing circuitry **64** has also caused the second energizable valve device **62** to become energized. When the second energizable valve device **62** becomes energized, pressurized air that is present in a volume between the air tanks **36** and the second energizable valve device **62** is allowed to pass through the second energizable valve device **62** and reach the filter **48** so as to regenerate the filter **48.** After passing through the second energizable valve device **62** the pressurized air may pass through a second-check valve **76** before passing through and regenerating the filter **48.** After having passed through the filter **48,** the pressurized air will flow along the bypass passage **52** and the air passage **58** and then via the first valve **40** to the ambient atmosphere. The compressor may, as illustrated in **FIG. 7****,** be running during regeneration of the filter **48** (e.g. to maintain a temperature for counteracting condensation in the compressor), or it may be turned off (e.g. if temperature in compressor is high enough).

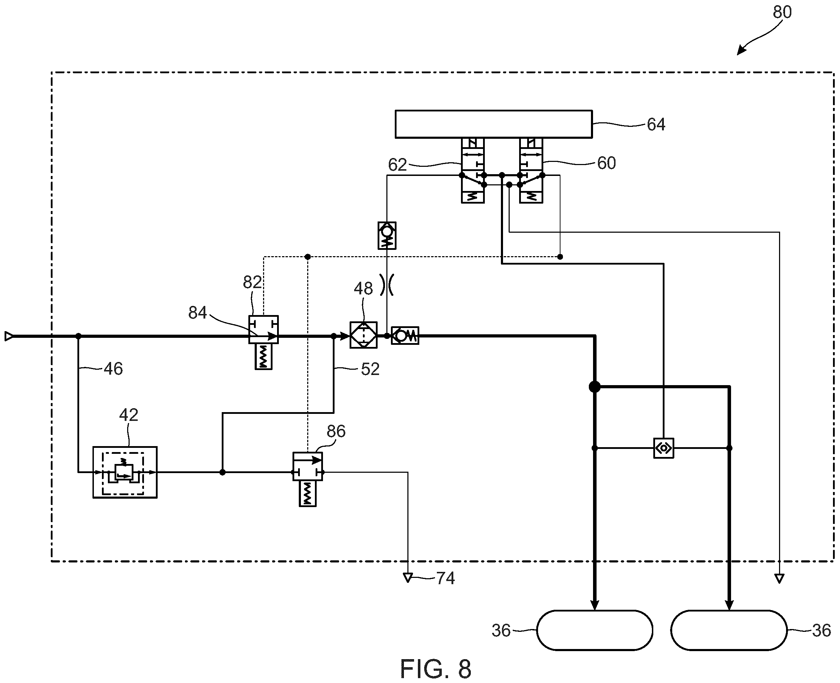

**FIGS. 8-11** illustrate schematically a pneumatic system **80** according to at least another example of this disclosure; wherein different operating modes of the pneumatic system are illustrated. A difference between the example in **FIGS. 8-11** compared to the example in **FIGS. 4-7** is that in **FIGS. 8-11****,** the first valve **82** only has one channel **84** and that the fluid communication to the ambient environment goes via a third valve **86** (instead of going via the second channel **72** of the first valve **40** as in **FIGS. 4-7**). More specifically, the pneumatic system **80** in the example of **FIGS. 8-11** further comprises the third valve **86** arranged between the second valve **42** and an outlet (exhaust port **74**) to the ambient environment. The third valve **86** has an open state in which air is allowed to flow through the third valve **86** to the ambient environment, and a closed state in which air is prevented from flowing through the third valve **86** to the ambient environment.

Thus, in **FIG. 8****,** which illustrates a corresponding mode of operation as **FIG. 4****,** the first valve **82** is in its second state, allowing air to flow through the first valve **82** to the air tanks **36.** The third valve **86** is closed, preventing passing of air to the ambient environment. The first and second energizable valve devices **60, 62** are not energized.

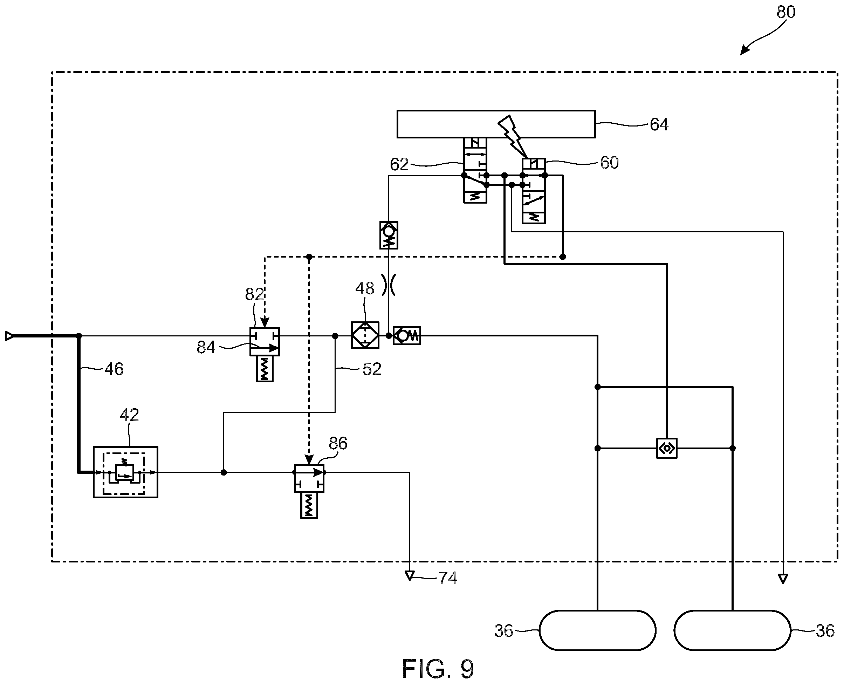

In **FIG. 9****,** which illustrates a corresponding mode of operation as **FIG. 5****,** the first energizable valve device **60** has become energized, and therefore the first valve **82** has moved to its first state in which it prevents air from passing to the air tanks **36.** The pressurized air that goes through the first energizable valve device **60** is not only used for changing the state of the first valve **82,** but also to changing the state of the third valve **86.** The third valve **86** which is normally closed, e.g. being spring biased, has now become opened due to the pressurized air that has passed through the first energizable valve device **60.**

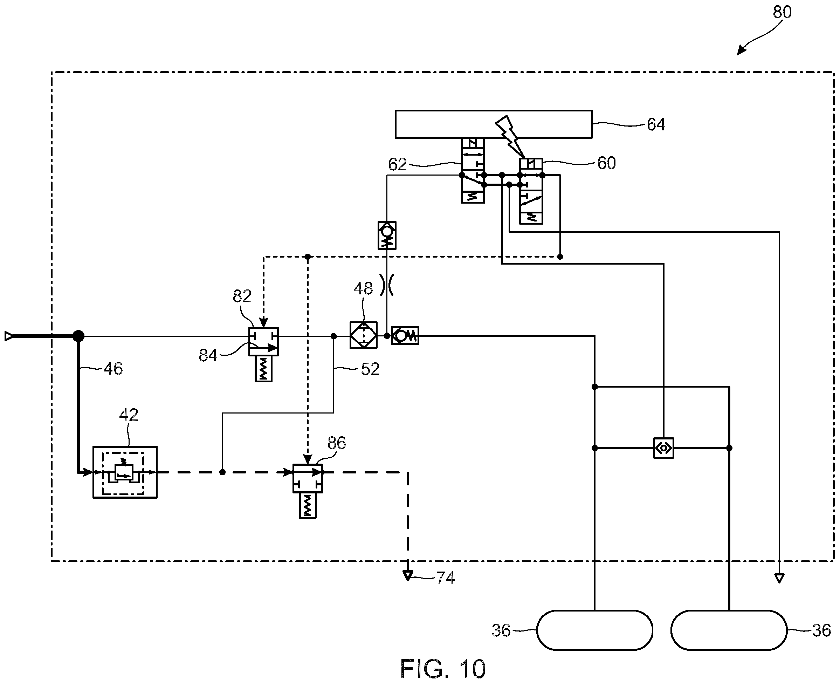

In **FIG. 10****,** which illustrates a corresponding mode of operation as **FIG. 6****,** the pressure in the second branch **46** is high enough to open the second valve **42** to allow pressurized air to pass through the second valve **42** and then through the third valve **86** to the ambient environment.

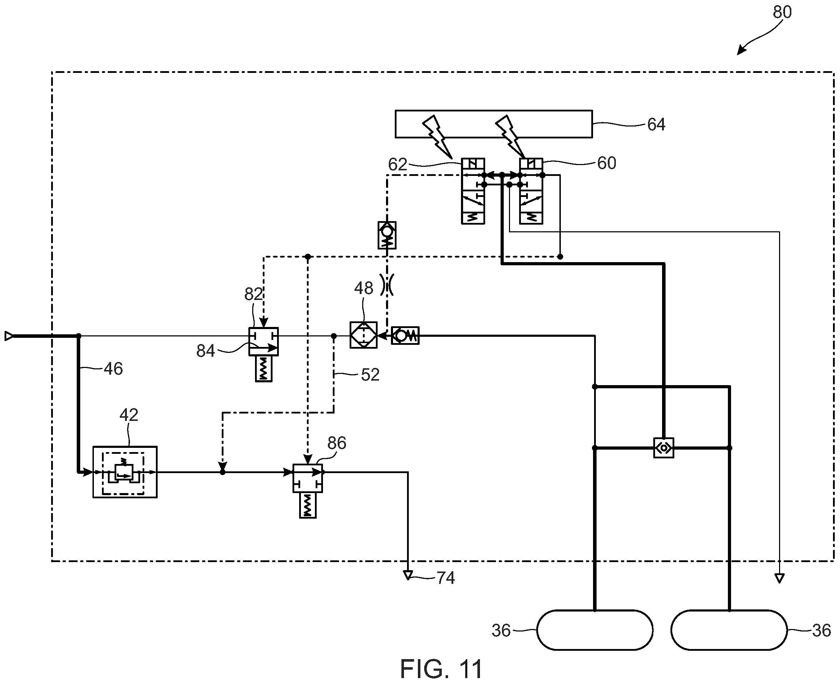

In **FIG. 11****,** which illustrates a corresponding mode of operation as **FIG. 7****,** the second energizable valve device **62** has also become energized, allowing pressurized air to pass through the second energizable valve device **62** to regenerate the filter **48** and then let the air pass through via the bypass passage **52** and the air passage through the third valve **86** to the ambient environment.

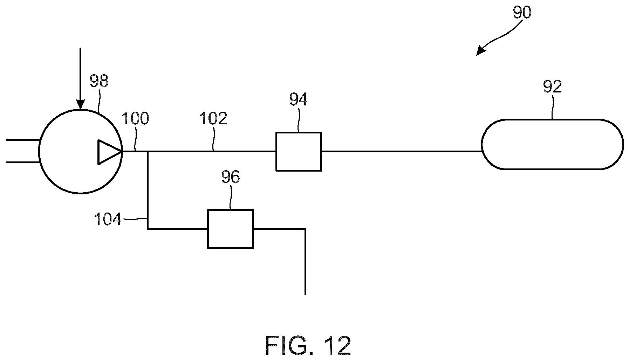

**FIG. 12** is a further schematic illustration of a pneumatic system **90** according to at least one example of this disclosure. The pneumatic system **90** comprises:
- an air tank **92,**
- a first valve **94,**
- a second valve **96,** and
- an air compressor **98** configured to provide air from an output of the air compressor **98** for pressurizing the air tank **92,** wherein a flow passage **100** extending from the output of the air compressor **98** is bifurcated such that a first branch **102** of the flow passage **100** extends to the first valve **94** and a second branch **104** of the flow passage **100** extends to the second valve **96,**
- wherein the first valve **94** is configured to control air flow from the output of the air compressor **98** to the air tank **92,** wherein the first valve **94** has a first state in which air is prevented from passing from the output of the air compressor **98** to the air tank **92** via the first valve **94,** and has a second state in which air is allowed to pass from the output of the air compressor **98** to the air tank **92** via the first valve **94,**
- wherein the pneumatic system **90** is operable in a first mode of operation in which the first valve **94** is in said first state,
- wherein, in said first mode of operation of the pneumatic system **90,** the second valve **96** is configured to control air flow from the output of the air compressor **98** to ambient environment, the second valve **96** having a closed state in which air is prevented from passing from the output of the air compressor **98** to the ambient environment via the second valve **96,** and an open state in which air is allowed to pass from the output of the air compressor **98** to the ambient environment via the second valve **96,**
- wherein the second valve **96** is configured to change to, or remain in, said open state when the pressure of the air in said second branch **104** is higher than a predetermined threshold, and to change to, or remain in, said closed state when the pressure of the air in the second branch **104** is lower than the predetermined threshold.

Example 1: A pneumatic system for a vehicle, comprising:
- an air tank,
- a first valve,
- a second valve, and
- an air compressor configured to provide air from an output of the air compressor for pressurizing the air tank, wherein a flow passage extending from the output of the air compressor is bifurcated such that a first branch of the flow passage extends to the first valve and a second branch of the flow passage extends to the second valve,
- wherein the first valve is configured to control air flow from the output of the air compressor to the air tank, wherein the first valve has a first state in which air is prevented from passing from the output of the air compressor to the air tank via the first valve, and has a second state in which air is allowed to pass from the output of the air compressor to the air tank via the first valve,
- wherein the pneumatic system is operable in a first mode of operation in which the first valve is in said first state,
- wherein, in said first mode of operation of the pneumatic system, the second valve is configured to control air flow from the output of the air compressor to ambient environment, the second valve having a closed state in which air is prevented from passing from the output of the air compressor to the ambient environment via the second valve, and an open state in which air is allowed to pass from the output of the air compressor to the ambient environment via the second valve,
- wherein the second valve is configured to change to, or remain in, said open state when the pressure of the air in said second branch is higher than a predetermined threshold, and to change to, or remain in, said closed state when the pressure of the air in the second branch is lower than the predetermined threshold.

Example 2: The pneumatic system of example 1, wherein the pneumatic system is operable in a second mode of operation in which the first valve is in the second state and in which the air tank becomes loaded with pressurized air supplied from the output of the air compressor via the first valve.

Example 3: The pneumatic system of any of examples 1-2, further comprising a filter located downstream of the first valve such that in the second state of the first valve, air that passes from the output of the air compressor to the air tank via the first valve, also passes through the filter after it has passed through the first valve, before the air reaches the air tank.

Example 4: The pneumatic system of example 3, wherein the pneumatic system is operable in a third mode of operation in which the first valve is in the first state and in which pressurized air from the air tank is provided to the filter to regenerate the filter.

Example 5: The pneumatic system of any of examples 1-4, further comprising:
- a first energizable valve device,
- a second energizable valve device, and
- processing circuitry configured to set a current mode of operation of the pneumatic system by selectively energizing the first and second valve devices

Example 6: The pneumatic system of example 5, wherein the air tank has a cut-off pressure, wherein when the air pressure in the air tank reaches the cut-off pressure, the processing circuitry energizes the first energizable valve device, thereby allowing pressurized air that is present in a volume between the air tank and the first energizable valve device to pass through the first energizable valve device and reach the first valve so as to pneumatically activate the first valve to change to its first state.

Example 7: The pneumatic system of any of examples 5-6 when dependent on example 4, wherein in order to set the pneumatic system in said third mode of operation, the processing circuitry is configured to energize the second energizable valve device, thereby allowing pressurized air that is present in a volume between the air tank and the second energizable valve device to pass through the second energizable valve device and reach the filter so as to regenerate the filter in said third mode of operation.

Example 8: The pneumatic system of example 7, wherein in order to set the pneumatic system in said third mode of operation, the processing circuitry is also configured to energize the first energizable valve device to allow pressurized air to pass through the first energizable valve device to pneumatically activate the first valve to change to its first state.

Example 9: The pneumatic system of any of examples 1-8, wherein the first valve comprises a first channel and a second channel, wherein in said first state of the first valve:
- the first channel is closed to prevent air from passing from the output of the air compressor to the air tank via the first valve, and
- the second channel is open to allow air that has passed from the output of the air compressor and through the second valve to then also pass through the second channel of the first valve before reaching the ambient environment.

Example 10: The pneumatic system of example 9, wherein in said second state of the first valve:
- the first channel is open to allow air to pass from the output of the air compressor, through the first channel of the first valve, to the air tank, and
- the second channel is closed to prevent air from passing from the second valve, through the first valve, to the ambient environment.

Example 11: The pneumatic system of any of examples 1-8, further comprising a third valve arranged between the second valve and an outlet to the ambient environment, the third valve having an open state in which air from the second valve is allowed to flow through the third valve to the ambient environment, and a closed state in which air from the second valve is prevented from flowing through the third valve to the ambient environment, wherein, in said first mode of operation of the pneumatic system, the third valve is in its open state.

Example 12: The pneumatic system of any of examples 1-11, wherein the air compressor is an oil-lubricated air compressor.

Example 13: The pneumatic system of any of examples 1-12, further comprising an air dryer located downstream of the air compressor and upstream of the air tank, wherein the first valve and the second valve are integrated in the air dryer.

Example 14: The pneumatic system of example 3 or any one of examples 4-13 when dependent on example 3, the pneumatic system further comprising a bypass passage which allows for fluid communication between a first point and a second point, wherein the first point is located in an air passage between the first valve and the filter, and wherein the second point is located in an air passage between the second valve and the first valve.

Example 15: The pneumatic system of any one of examples 1-14, wherein the first valve is spring-biased towards the second state.

Example 16: The pneumatic system of any one of examples 1-15, wherein the second valve is spring-biased towards the closed state.

Example 17: The pneumatic system of example 3 or any one of examples 4-16 when dependent on example 3, further comprising a check-valve, wherein the filter is located between the first valve and the check-valve, wherein the check-valve allows air to flow from the filter through the check valve to the air tank, but prevents air flow in the opposite direction.

Example 18: The pneumatic system of example 17 when dependent on example 5, wherein said check-valve is a first check-valve, the pneumatic system further comprising a second check-valve, wherein the second check-valve is located in an air passage extending from the second energizable valve device to a point located between the filter and the first check-valve.

Example 19: The pneumatic system of any of examples 1-18, further comprising:
- a first air passage extending from the output of the air compressor to the first valve,
- a second air passage extending from the first valve to the air tank,
- a third air passage extending from the output of the air compressor to the second valve,
- a fourth air passage extending from the second valve to the first valve,
- a fifth air passage extending from the first valve to the ambient environment,
wherein pressurized air passes said first air passage and said second air passage on its way from the output of the compressor to the air tank, and wherein air passes said fourth air passage and said fifth air passage on its way from the second valve to the ambient environment.

Example 20: A vehicle comprising the pneumatic system according to any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A pneumatic system for a vehicle, comprising:
- an air tank,
- a first valve,
- a second valve, and
- an air compressor configured to provide air from an output of the air compressor for pressurizing the air tank, wherein a flow passage extending from the output of the air compressor is bifurcated such that a first branch of the flow passage extends to the first valve and a second branch of the flow passage extends to the second valve,
- wherein the first valve is configured to control air flow from the output of the air compressor to the air tank, wherein the first valve has a first state in which air is prevented from passing from the output of the air compressor to the air tank via the first valve, and has a second state in which air is allowed to pass from the output of the air compressor to the air tank via the first valve,
- wherein the pneumatic system is operable in a first mode of operation in which the first valve is in said first state,
- wherein, in said first mode of operation of the pneumatic system, the second valve is configured to control air flow from the output of the air compressor to ambient environment, the second valve having a closed state in which air is prevented from passing from the output of the air compressor to the ambient environment via the second valve, and an open state in which air is allowed to pass from the output of the air compressor to the ambient environment via the second valve,
- wherein the second valve is configured to change to, or remain in, said open state when the pressure of the air in said second branch is higher than a predetermined threshold, and to change to, or remain in, said closed state when the pressure of the air in the second branch is lower than the predetermined threshold.

2. The pneumatic system of claim 1, wherein the pneumatic system is operable in a second mode of operation in which the first valve is in the second state and in which the air tank becomes loaded with pressurized air supplied from the output of the air compressor via the first valve.

3. The pneumatic system of any of claims 1-2, further comprising a filter located downstream of the first valve such that in the second state of the first valve, air that passes from the output of the air compressor to the air tank via the first valve, also passes through the filter after it has passed through the first valve, before the air reaches the air tank.

4. The pneumatic system of claim 3, wherein the pneumatic system is operable in a third mode of operation in which the first valve is in the first state and in which pressurized air from the air tank is provided to the filter to regenerate the filter.

5. The pneumatic system of any of claims 1-4, further comprising:
- a first energizable valve device,
- a second energizable valve device, and
- processing circuitry configured to set a current mode of operation of the pneumatic system by selectively energizing the first and second valve devices.

6. The pneumatic system of claim 5, wherein the air tank has a cut-off pressure, wherein when the air pressure in the air tank reaches the cut-off pressure, the processing circuitry energizes the first energizable valve device, thereby allowing pressurized air that is present in a volume between the air tank and the first energizable valve device to pass through the first energizable valve device and reach the first valve so as to pneumatically activate the first valve to change to its first state.

7. The pneumatic system of any of claims 5-6 when dependent on claim 4, wherein in order to set the pneumatic system in said third mode of operation, the processing circuitry is configured to energize the second energizable valve device, thereby allowing pressurized air that is present in a volume between the air tank and the second energizable valve device to pass through the second energizable valve device and reach the filter so as to regenerate the filter in said third mode of operation.

8. The pneumatic system of claim 7, wherein in order to set the pneumatic system in said third mode of operation, the processing circuitry is also configured to energize the first energizable valve device to allow pressurized air to pass through the first energizable valve device to pneumatically activate the first valve to change to its first state.

9. The pneumatic system of any of claims 1-8, wherein the first valve comprises a first channel and a second channel, wherein in said first state of the first valve:
- the first channel is closed to prevent air from passing from the output of the air compressor to the air tank via the first valve, and
- the second channel is open to allow air that has passed from the output of the air compressor and through the second valve to then also pass through the second channel of the first valve before reaching the ambient environment.

10. The pneumatic system of claim 9, wherein in said second state of the first valve:
- the first channel is open to allow air to pass from the output of the air compressor, through the first channel of the first valve, to the air tank, and
- the second channel is closed to prevent air from passing from the second valve, through the first valve, to the ambient environment.

11. The pneumatic system of any of claims 1-8, further comprising a third valve arranged between the second valve and an outlet to the ambient environment, the third valve having an open state in which air from the second valve is allowed to flow through the third valve to the ambient environment, and a closed state in which air from the second valve is prevented from flowing through the third valve to the ambient environment, wherein, in said first mode of operation of the pneumatic system, the third valve is in its open state.

12. The pneumatic system of any of claims 1-11, wherein the air compressor is an oil-lubricated air compressor.

13. The pneumatic system of any of claims 1-12, further comprising an air dryer located downstream of the air compressor and upstream of the air tank, wherein the first valve and the second valve are integrated in the air dryer.

14. The pneumatic system of claim 3 or any one of claims 4-13 when dependent on claim 3, the pneumatic system further comprising a bypass passage which allows for fluid communication between a first point and a second point, wherein the first point is located in an air passage between the first valve and the filter, and wherein the second point is located in an air passage between the second valve and the first valve.

15. A vehicle comprising the pneumatic system according to any of claims 1-14.
